Europäisches Patentamt

(19) European Patent Office

Office européen des brevets

(11) Publication number: **0 053 505**
**B1**

(12) **EUROPEAN PATENT SPECIFICATION**

(45) Date of publication of patent specification: **10.12.86**

(51) Int. Cl.⁴: **G 11 B 5/09, H 03 M 13/00**

(21) Application number: **81305641.3**

(22) Date of filing: **27.11.81**

(54) Pulse code modulated signal processing apparatus.

(30) Priority: **01.12.80 JP 169410/80**

(43) Date of publication of application:
**09.06.82 Bulletin 82/23**

(45) Publication of the grant of the patent:
**10.12.86 Bulletin 86/50**

(84) Designated Contracting States:
**DE FR GB IT NL**

(56) References cited:
**FR-A-2 440 593**
**GB-A-2 019 168**
**GB-A-2 071 370**
**US-A-4 234 896**

(73) Proprietor: **SONY CORPORATION**
**7-35 Kitashinagawa 6-Chome Shinagawa-ku**
**Tokyo 141 (JP)**

(73) Proprietor: **Kabushiki Kaisha Toshiba**
**72, Horikawa-cho Saiwai-ku**
**Kawasaki-shi Kanagawa-ken 210 (JP)**

(72) Inventor: **Hoshimi, Susumu**
**23 Nakao-cho, Asahi-ku**
**Yokohama-shi Kanagawa-ken (JP)**
Inventor: **Kojima, Tadashi**
**20-49 Kugo-cho 6-chome**
**Yokosuka-shi Kanagawa-ken (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to pulse code modulated (PCM) signal processing apparatus. Such apparatus is particularly, but not exclusively, suitable for use where an audio signal is digitized for use in a video tape recorder (VTR) or a digital audio disc, so as to reproduce a recorded signal which has been interleaved utilizing an error correction method.

There has been proposed a PCM signal recording and reproducing apparatus for modulating an analog audio signal such as music to form a PCM signal. An error correction code and an error detection code are added and the signal is converted to a signal format similar to a television signal, for recording and reproduction by a video tape recorder (VTR). In the VTR, when drop-out is caused, for example, by dust on the magnetic tape forming the recording medium, there is a possibility that a burst error will occur in the reproduced PCM signal. If such a burst error occurs, it becomes quite difficult to error-correct the lost data.

To deal with this problem the following operation is performed. In a PCM processor wherein an audio PCM signal is converted to a quasi-video signal, upon converting the audio PCM signal to the quasi-video signal, that is, during recording, the sample words forming the PCM data are separated into blocks each comprising a predetermined number of words, and an error correction code is generated for each block of PCM data. The PCM data and the error correction code are respectively interleaved so as to have different delay times from each other and the error detection code is further added to the interleaved data. The signals are then converted to a quasi-video signal. When the VTR reproduces the signal thus recorded, the quasi-video signal is converted to the audio PCM signal in an operation which is the opposite of that described above, and de-interleaving is performed so as to disperse the burst error and to correct the data. With such an arrangement, during normal reproduction, all the correction capabilities are utilized so that nearly all of the original PCM data can be reproduced.

However, when a recording VTR has not as yet been switched to the recording mode and the video signal input terminal of the VTR is directly and electrically connected to a video signal output terminal, and since it is necessary to monitor the input signal thereof even when the VTR is not operating, a mode which is sometimes designated the E—E mode is utilized. In this mode, the video signal output of the PCM processor is directly coupled to the video signal input terminal. When this mode is changed and the VTR is switched to the reproducing mode, or an edited magnetic tape is reproduced, two different mixed data may exist before and after the stage where they are de-interleaved and converted to the correct forms. In such a case, the error correcting circuit may decide that there is an error and perform error correction even although no error in fact exists. The error correcting circuit may therefore produce data which are quite different from the original data, and when such data are supplied to a digital-to-analog (D/A) converter and converted to an audio signal, the audio signal will result in an abnormal sound and may even damage loudspeakers which are coupled to reproduce the audio signal.

In order to prevent erroneous correction, a method has been proposed in our UK patent specification GB—A—2 071 370, published 16.9.1981, where the error decision is made by employing error detection results both from using an error detection code and syndromes formed from the error correction code and the reproduced PCM data. That is, when an error syndrome indicates the presence of an error, although the absence of an error is indicated by error detecting means, and when the syndrome indicates the existence of another erroneous word in addition to the erroneous word identified by the error indicator which is the result of the error detection, and the position thereof is unknown, the error correction is inhibited and instead, all the PCM words within the block are compensated (that is concealed). For compensation, a front-end hold is used to replace the erroneous word with the correct word occurring prior thereto or a mean value interpolation is used to replace the erroneous word with the mean value of the correct words before and after it. A similar method is also proposed in our UK patent specification GB—A—2 019 168, where the error correction is inhibited when the number of detected errors exceeds the number of correct-able errors.

In these methods, when a burst error occurs at a connection point of the input data, such methods will only be effective if the burst error is short. If the burst error is long there will be many erroneous words in the data after de-interleaving and it becomes impossible to check whether or not the error indicator and the syndrome have a normal relationship, and correction of the errors cannot be made.

According to the present invention there is provided pulse code modulation signal processing apparatus arranged to receive successive transmission blocks, each comprising time-interleaved PCM data, and error-correction and error-detection words, said apparatus comprising:

detecting means responsive to said error-detection words for detecting if a received transmission block contains an error;

error identifying means for producing an error-indicator signal so as to identify as being erroneous each of the time-interleaved words included in the received transmission block which has been detected as containing an error;

de-interleaving means for time-interleaving each received transmission block to recover a de-interleaved block formed of de-interleaved PCM and error-correction words with erroneous de-interleaved words being respectively identified;

syndrome generating means coupled to said de-interleaving means for generating error-syndrome signals using said de-interleaved PCM and said error-correction words in said de-interleaved block;

error correcting means responsive to said error-syndrome for correcting an erroneous PCM word in said de-interleaved block as a function of the remaining non-erroneous PCM and error-correction words in that de-interleaved block;

characterized by:

abnormality detecting means for detecting the relationship between said error-indicator signal from said error identifying means and said error-syndrome from said syndrome generating means, and for selectively producing an abnormality indicating signal when an abnormal relationship exists between said error-indicator signal and said error-syndrome, and a normality indicating signal at other times; and

inhibit means for setting a flag which is supplied to said error correcting means so as to inhibit the correcting operation when either all of said error-correction words in said de-interleaved block are identified as erroneous by their error-indicator signals or said abnormality indicating signal is present or when both these conditions are fulfilled, and for resetting said flag thereby enabling the correction operation when said normality indicating signal is present.

The invention will now be described by way of example with reference to the accompanying drawings, throughout which like references designate like elements, and in which:

Figures 1A, 1B, 1C and 1D are diagrams showing the format of one block of data and waveforms of the recording signal of an embodiment of the invention;

Figure 2 is a block diagram showing an arrangement of a recording encoder and a reproducing decoder in an embodiment of the invention; and

Figure 3 is a diagram for explaining the operation of an embodiment of the invention.

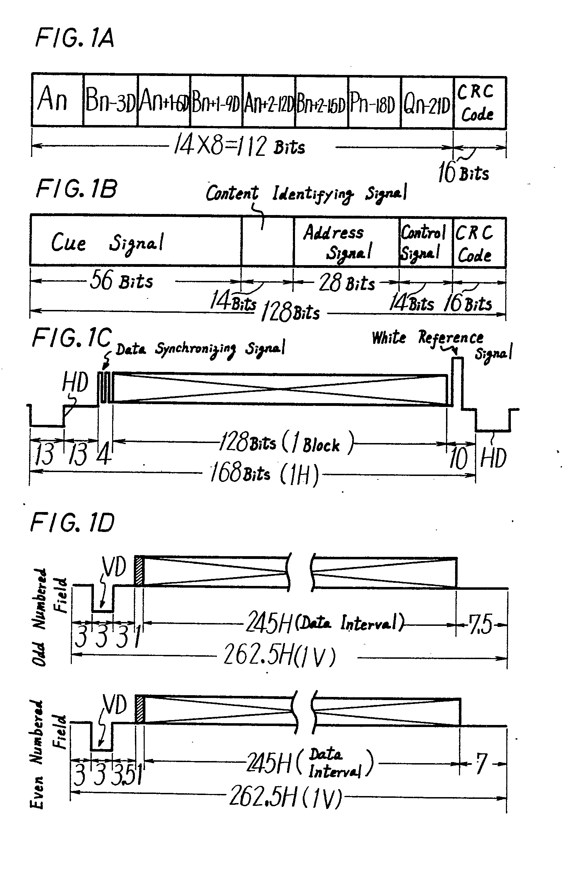

An embodiment of the invention comprises an audio PCM signal recording and reproducing apparatus in which a conventional home rotary two-head type VTR is used, and which is not modified but has an adaptor connected to it. Such a PCM signal adaptor converts audio PCM data to a signal format similar to a television signal format. A standard format is shown in Figure 1.

Figure 1A illustrates a data block which is to be inserted into one horizontal interval (1H) and Figure 1B illustrates a control block which is to be inserted into the prior horizontal interval 1H. Audio signals of two channels are respectively sampled at a sampling frequency fs of 44.056 kHz and are converted to data words Ai and Bi each comprising fourteen bits. One block comprises six PCM words, two parity words Pi and Qi for error correction, and a cyclic redundancy check (CRC) code of sixteen bits to detect the absence or presence of the aforesaid data having a total of eight words. Accordingly, the length of one block becomes 128 bits. The parity words Pi and Qi for error correction are formed with respect to the six PCM words and is interleaved word by word. In Figure 1A, suffixes attached to each word show the interleaving relationship where a unit delay is represented by D (one block). The control block seen in Figure 1B comprises a cue signal of fifty-six bits, a content identifying signal of fourteen bits, an address signal of twenty-eight bits, a control signal of fourteen bits and a CRC code of sixteen bits so as to detect errors.

As illustrated in Figure 1C, into 1H (168 bits) of the horizontal synchronizing signal HD is inserted one block of 128 bits. A data synchronizing signal is added to the beginning thereof and a white reference signal is added to the end thereof. Also, as illustrated in Figure 1D, the data interval is 245H in one field (1V) excluding an equalizing pulse interval and a vertical synchronizing signal (VD) interval having a total of 9H (9.5H for an even-numbered field) and an interval of 7.5H (7H for an even-numbered field) to include the head switching timing. As shown by the cross-hatched section in the figure, the control block is inserted into the first 1H.

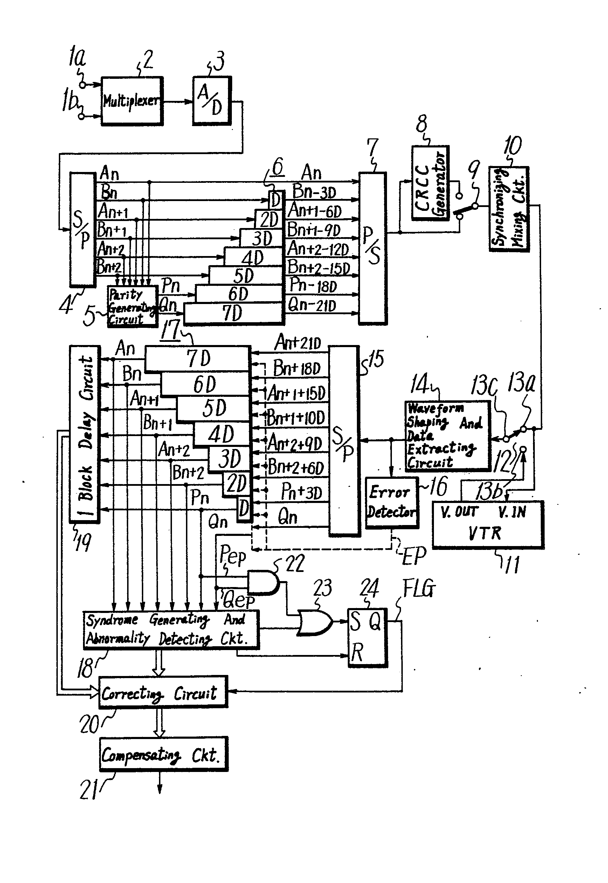

Figure 2 shows an embodiment including a recording encoder and a reproducing decoder. Each input terminal 1a and 1b separate analog output signals of the A and B channels derived from a sample-and-hold circuit (not shown) which is supplied through a multiplexer 2 to an analog-to-digital (A/D) converter 3 where they are digitized with one word for each sample. The output of the A/D converter 3 is supplied to a serial-parallel converter 4 and is converted to six parallel words. These six words such as $A_n$, $B_n$, $A_{n+1}$, $B_{n+1}$, $A_{n+2}$ and $B_{n+2}$ are supplied to a parity generating circuit 5 and to an interleaving delay circuit 6. The parity generating circuit 5 operates as follows:

$$P_n = A_n \oplus B_n \oplus A_{n+1} \oplus B_{n+1} \oplus A_{n+2} \oplus B_{n+2}$$

$$Q_n = T^6 A_n \oplus T^5 B_n \oplus T^4 A_{n+1} \oplus T^3 B_{n+1} \oplus T^2 A_{n+2} \oplus T B_{n+2}$$

thereby producing first and second parity words. In the above equation, reference letter $n$ denotes a multiple of either zero or three, $\oplus$ represents a modulo-two addition of each bit corresponding to each word, and T represents a generating matrix. The first and second parity words can correct one word error within one block and if the position of the error word is known, two-word errors can also be corrected. The interleaving delay circuit 6 is provided to delay the six PCM data series from the serial-parallel converter 4 and the two parity data series from the parity generating circuit 5 by different amounts differing by a unit delay time D (0, D, 2D, 3D, 4D, 5D, 6D, 7D). In practice, a random access memory (RAM) is utilized for such delay. Thus, the write and read addresses of the RAM are controlled so as to perform the interleaving and the frequency of the read clock signal is raised so it is higher than the write clock signal, so that the time-base is compressed thereby forming a data blank corresponding to a vertical blanking period. An output of the delay circuit 6 is supplied to a parallel-serial converter 7 and converted to bit serial form, and the CRC code is added to it by a CRC code generator 8 and a switch 9 so as to produce a data output having the form shown in Figure 1A. To this data output are added the synchronizing signal, the equalizing pulse and so forth by a synchronizing mixing circuit 10 so as to form a recording signal having the same signal format as the television signal shown in Figures 1C and 1D. This signal is supplied to a video input terminal of a VTR 11 and to one input terminal 13a of a switch 12.

A reproduced signal obtained at the video output terminal of the VTR 11 is supplied to another input terminal 13b of the switch 12. A signal produced at an output terminal 13c of the switch 12 is supplied to a waveform shaping and data extracting circuit 14 of the reproducing decoder. Although not shown, a synchronizing signal is separated from the reproduced signal and is utilized to form a timing pulse signal which is required for data processing by the reproducing system. The reproduced data from the circuit 14 is supplied to a series-parallel converter 15 and to an error detecting circuit 16. The error detecting circuit 16 is provided to detect errors by utilizing the CRC code for each block of the reproduced data and produces an error indicator EP which is "1" if an error exists and "0" if no error exists. Eight words appearing at the output of the serial-parallel converter 15, such as $A_{n+21D}$, $B_{n+18D}$, $A_{n+1+15D}$, $B_{n+1+12D}$, $A_{n+2+9D}$, $B_{n+2+6D}$, $P_{n+3D}$ and $Q_n$, are supplied to a de-interleaving delay circuit 17 in which a delay (7D, 6D, 5D, 4D, 3D, 2D, D, 0) is applied so as to cancel the delay caused by the interleaving. In this case, the de-interleaving delay circuit 17 receives the error indicator signal EP as well as the data, and the error indicator signal EP of one bit is added to each word of the data.

In practice, the de-interleaving delay circuit 17 comprises a memory in which addresses are controlled so as to add a predetermined delay, and the frequency of the read clock signal is made lower than the frequency of the write clock signal so as to perform time-base extension. Data $A_n$, $B_n$, $A_{n+1}$, $B_{n+1}$, $A_{n+2}$, $B_{n+2}$, $P_n$ and $Q_n$ de-interleaved by the delay circuit 17 together with the error indicator signals are supplied to a syndrome generating and abnormality detecting circuit 18 and are also supplied, through a one-block delay circuit 19, to a correcting circuit 20. The correcting circuit 20 receives the syndrome signals which have been generated. An uncorrectable erroneous word is interpolated from the mean value in a compensating circuit 21 which is connected to the correcting circuit 20.

Error indicator signals Pep and Qep relative to two parity data are supplied to an AND gate 22 and the output of the AND gate 22 and an abnormality detected signal from the syndrome generating and abnormality detecting circuit 18 are supplied to an OR gate 23. The output of the OR gate 23 is supplied to a flip-flop 24 as the set input (S) and a normal detected signal from the syndrome generating and abnormality detecting circuit 18 is supplied to the flip-flop 24 at the reset input (R). A flag signal FLG generated by the flip-flop 24 is supplied to the correcting circuit 20 as a control signal and when the FLG="1", the correcting circuit 20 is enabled so as to correct an error.

Correction or compensation of an erroneous word is accomplished as follows. For the PCM data of one block to generate the parity words P and Q, six words, $W_1$ to $W_6$ may be considered. Six words $W_1$ to $W_6$ and the parity words P and Q are reproduced by an operation as follows:

$$S_1 = P + \sum_{n=1}^{6} W_n = P_e \oplus \sum_{n=1}^{6} W_{ne}$$

$$S_2 = Q + \sum_{n=1}^{6} T^{7-n} W_n = Q_e \oplus \sum_{n=1}^{6} T^{7-n} W_{ne}$$

where reference letters Pe and Qe designate error patterns of the parity words P and Q, the error patterns in which, for example, the presence or absence of the error of each bit is respectively represented by "1" or "0", and Wne represents an error pattern of the PCM word. Thus syndrome signals $S_1$ and $S_2$ are formed. If no error exists, $S_1 \neq 0$ and $S_2 = 0$. If only the parity word P is erroneous, $S_1 = 0$ and $S_2 \neq 0$. Moreover, if only the two parity words P and Q are erroneous or if one word or more of the PCM data words $W_1$ to $W_6$ are erroneous, $S_1 \neq 0$ and $S_2 \neq 0$. However, since the error correction is not necessarily required for a case where only either of the parity word P or Q is erroneous, a description will now be given for a case where a PCM word is erroneous.

1. For a one word error of the PCM words:
   Can be expressed as:

$$\hat{W}i = Wi \oplus Wie$$

where $\hat{W}i$ represents an erroneous word, Wi represents a true value, Wie represents an error pattern.

(a) If P is correct and the error position $i$ is specified by the error indicator EP, since:

$$S_1 = \sum_{n=1}^{6} W_{ne} = Wie$$

thus $Wi = \hat{W}i \oplus S_1$

(b) If P is erroneous but Q is correct and the error position $i$ is specified by the error indicator EP, since:

$$S_2 = \sum_{n=1}^{6} T^{7-n} W_{ne} = T^{7-i} Wie$$

Thus $Wi = \hat{W}i \oplus Wie = \hat{W}i \oplus T^{i-7}S_2$

(c) If P and Q are correct but the erroneous word of a one word error is unknown, the data words have a one word error and if it is represented by $\hat{W}i$:

thus $S_1 = Wie \qquad S_2 = T^{7-i}Wie$
then $i$ to satisfy:

$S_1 = T^{i-7}S_2$ or $T^{7-i}S_1 = S_2$

is searched. If $i$ is known,
thus $Wi = \hat{W}i \oplus S_1$.

2. If P and Q are correct but two words (Wi, Wj) of the PCM word are erroneous (where each error pattern is given as Wie and Wje, this can be expressed as follows:

$\hat{W}i = Wi \oplus Wie, \quad \hat{W}j = Wj \oplus Wje$

$\begin{cases} S_1 = Wie \oplus Wje \\ S_2 = T^{7-i}Wie \oplus T^{7-j}Wje \end{cases}$

Therefore

$Wje = (I \oplus T^{i-j})^{-1}(S_1 \oplus T^{i-7}S_2)$

(where letter I denotes a unit matrix)

$Wie = S_1 \oplus Wje$

$Wi = \hat{W}i \oplus Wie$

$\quad = \hat{W}i \oplus S_1 \oplus (I \oplus T^{i-j})^{-1}(S_1 \oplus T^{i-7}S_2)$

$W_j = \hat{W}j \oplus Wje$

$\quad = \hat{W}j \oplus (I \oplus T^{i-j})^{-1}(S_1 \oplus T^{i-7}S_2)$

The correcting circuit 20 performs the error corrections described above. In cases other than the above, the words identified as erroneous by the error indicator EP are compensated by the compensating circuit 21. However, as is the case described below, if the error position cannot be detected even when the presence of the error is known, the error is detected as an abnormality and an abnormality detecting output is produced so as to inhibit the correction operation and instead, to perform a compensation operation.
3.(a) For a case wherein both P and Q are correct, but the erroneous word is unknown and also the error position $i$ cannot be detected by the method of 1(c), for example, erroneous words of two words or above, although not specified by the error indicator EP.

(b) P is correct, but Q is erroneous. Although the error pointer EP of each word of $W_1$ to $W_6$ does not specify the erroneous word, $S_1 \neq 0$ is established.

(c) Q is correct, but P is erroneous. Although the error pointer EP of each word of $W_1$ to $W_6$ does not specify the erroneous word, $S_2 \neq 0$ is established.

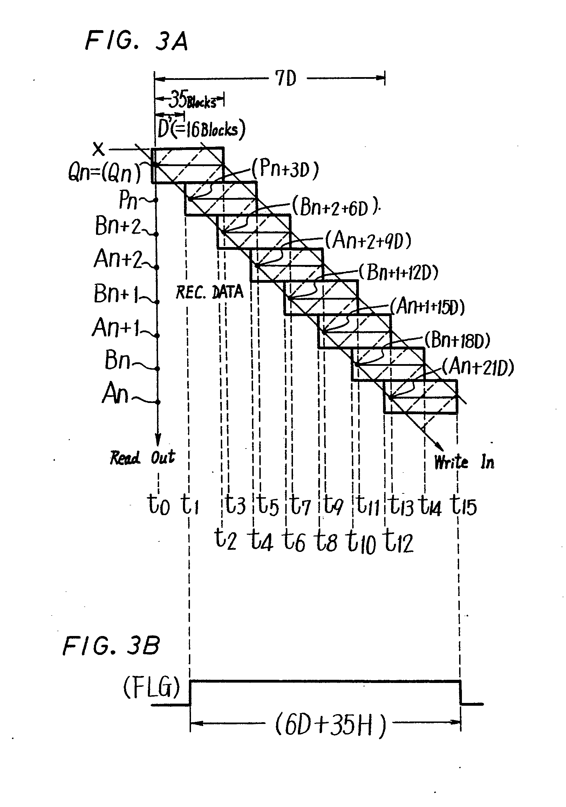

A further description of the embodiment for the case where the switch 12 associated with VTR 11 is switched from the E—E mode where the input terminal 13a is connected to the output terminal 13c, to the reproducing mode where the input terminal 13b is connected to the output terminal 13c. In a memory area of the de-interleaving delay circuit 17, the reproduced data of one block are sequentially written word by word in each address spaced from each by D=16 blocks and with respect to the address of the same block, such data are sequentially read out word by word. As shown in Figure 3A, when data $(A_{n+21D})$ $(B_{n+18D}),\ldots (P_{n+3D})$ and $Q_n$ of a first block of the reproduced data just after the connection point X are written in, together with $(Q_n)$, then $Q_n$ and the reproduced data $A_n$, $B_n,\ldots P_n$ are read out. In this case, if a time beyond 21D after the data is switched is represented by $d$, for example, it is assumed that a burst error due to drop-out occurs for a period of 35 blocks. If so arranged, all write data, shown by a cross-hatched area in the figure, included in the interval of 35H after the connection point X, will be in error. If no error exists excluding the above-mentioned error, since the error is a one-word error of the parity word Q during the interval $t_0$ to $t_1$, the reproduced data will be produced as it is. If the timing becomes $t_1$, the error indicators Pep and Qep for the parity word de-interleaved become "1" simultaneously so that the output of the AND gate 22 will be "1" which will set the flip-flop 24 which will produce the flag signal FLG "1" as shown in Figure 3B. By such a process, the error correcting circuit 20 is inhibited from correcting the error and instead, it will compensate the erroneous word in the PCM word. In this embodiment, during the timing $t_{15}$ wherein no erroneous word is presented, the flip-flop 24 is reset and the flag signal FLG will be "0" so as to discontinue inhibiting of the error correction circuit 20. Absence of an error word can be detected due to the fact that the two syndromes $S_1$ and $S_2$ are both represented by "0". On the other hand, to detect the normal state during the timing $t_{14}$ wherein a position of the erroneous word which has been searched from the syndromes $S_1$ and $S_2$ by the method 1(c) described above is made coincident with a position of one word error specified by the error indicator, and the flag signal will be "0" according to such detection.

If the flag signal FLG does not occur thereby not to inhibit the correction operation, the correction or the compensation of the error will be performed as described below.

(1) Interval $t_0$ to $t_1$: Since the error is a one word error of the parity word Q, the PCM word is produced as it is.
(2) Interval $t_1$ to $t_2$: Since the error is a two word error of the parity data P and Q, the PCM word is produced as it is.
(3) Interval $t_2$ to $t_3$: Since the error is a total of three word errors of the parity words P and Q and one word of the PCM word, it becomes impossible to correct the errors and hence, the erroneous word of the PCM word is compensated.

(4) Interval $t_3$ to $t_4$: Since the error is a total of two word errors of the parity word P and one word of the PCM word and the parity word Q is correct, the correction is performed according to the method of 1(b) previously described. However, due to correction employing different data, such correction will be erroneous.

(5) Interval $t_4$ to $t_5$: Since the error is in three words, two erroneous words of the PCM word are compensated.

(6) Intervals $t_5$ to $t_6$, $t_7$ to $t_8$, $t_9$ to $t_{10}$ and $t_{11}$ to $t_{12}$: Since the parity words P and Q are correct and the error is a two word error of the PCM word, the correction is performed according to the above-mentioned method 2. However, due to the employment of different data, the correction will be erroneous.

(7) Intervals $t_6$ to $t_7$, $t_8$ to $t_9$, $t_{10}$ to $t_{11}$ and $t_{12}$ to $t_{13}$: Since the error is a three-word error, each erroneous word is compensated.

(8) Interval $t_{13}$ to $t_{14}$: Since the parity words P and Q are correct and the error is a two-word error of the PCM word, the correction is performed according to the above described method 2. In this case, since data to be employed are all included in the reproduced data, the correction will correct the errors.

(9) Interval $t_{14}$ to $t_{15}$: Since the error is a one word error, the correction is carried out in accordance with the above-described method 1(a). The correction will correct the data.

The embodiment can prevent erroneous corrections in the intervals (4) and (6) from occurring. Merely by detecting the abnormal relationship between the error indicator and the syndrome, in other words, detecting that the syndrome is not indicated by 0, although the erroneous word is not identified by the error indicator EP, since $S_1=0$ and $S_2=0$ are established as described above, it is not possible to prevent the erroneous correction from occurring in the interval where the erroneous word is identified by the error indicator EP. However, with the embodiment, since the flag has already been displayed before the error indicators of all the parity words identify the erroneous words, the erroneous correction can be prevented positively and reliably. Moreover, when a burst error having a length $d$ with the relationship D is less than d is less than 2D occurs after the connection point of the different data, the embodiment provides an effective correction.

## Claims

1. Pulse code modulation (PCM) signal processing apparatus arranged to receive successive transmission blocks, each comprising time-interleaved PCM data, and error-correction ($P_n$, $Q_n$) and error-detection words (CRC), said apparatus comprising:

detecting means (16) responsive to said error-detection words (CRC) for detecting if a received transmission block contains an error;

error identifying means (16) for producing an error-indicator signal (EP) so as to identify as being erroneous each of the time-interleaved words included in the received transmission block which has been detected as containing an error;

de-interleaving means (17) for time-interleaving each received transmission block to recover a de-interleaved block formed of de-interleaved PCM and error-correction words ($P_n$, $Q_n$) with erroneous de-interleaved words being respectively identified;

syndrome generating means (18) coupled to said de-interleaving means (17) for generating error-syndrome signals using said de-interleaved PCM and said error-correction words ($P_n$, $Q_n$) in said de-interleaved block;

error correcting means (20) responsive to said error-syndrome for correcting an erroneous PCM word in said de-interleaved block as a function of the remaining non-erroneous PCM and error-correction words in that de-interleaved block;

characterized by:

abnormality detecting means (18) for detecting the relationship between said error-indicator signal (EP) from said error identifying means (16) and said error-syndrome from said syndrome generating means (18), and for selectively producing an abnormality indicating signal when an abnormal relationship exists between said error-indicator signal (EP) and said error-syndrome, and a normality indicating signal at other times; and inhibit means (22, 23, 24) for setting a flag (FLG) which is supplied to said error correcting means (20) so as to inhibit the correcting operation when either all of said error-correction words ($P_n$, $Q_n$) in said de-interleaved block are identified as erroneous by their error-indicator signals (EP) or said abnormality indicating signal is present or when both these conditions are fulfilled, and for resetting said flag (FLG) thereby enabling the correction operation when said normality indicating signal is present.

2. PCM signal processing apparatus according to claim 1 wherein said inhibit means (22, 23, 24) includes gate means (22, 23) connected to said de-interleaving means (17) and said abnormality detecting means (18) and for receiving said error-indicator signal (Pep, Qep) of all of said error correction words ($P_n$, $Q_n$) from said de-interleaved block and said normality or said abnormality indicating signal from said abnormality detecting means (18).

3. PCM signal processing apparatus according to claim 2 wherein said gate means (22, 23) comprises an AND gate (22) for receiving said error indicator signal (Pep, Qep) of all of said error correction words ($P_n$, $Q_n$) from said de-interleaved block and an OR gate (23) for receiving the output from said AND gate (22) and the output from said abnormality detecting means (18).

4. PCM signal processing apparatus according to claim 3 wherein said inhibit means (22, 23, 24) for setting said flag (FLG) includes a flip-flop (24) and receives the outputs from said OR gate (23) and said normality indicating signal from said abnormality detecting means (18).

5. PCM signal processing apparatus according to claim 4 wherein said flip-flop (24) is set by said output from said OR gate (23) so as to produce said flag (FLG) for inhibiting said error correcting means (20) and is reset by said normality indicating signal from said abnormality detecting means (18) so as to produce said flag (FLG) for releasing said inhibiting.

6. PCM signal processing apparatus according to claim 1 wherein said de-interleaving means (17) includes a series to parallel converter (15) and a time delay means (17) for converting said PCM signal into a plurality of time delayed signals.

7. PCM signal processing apparatus according to claim 6 further including a one block delay circuit (19) connected between said time delay means (17) and said error correcting means (20).

**Patentansprüche**

1. Pulscodemodulations - (PCM) - Signalver - arbeitungsanordnung, die so ausgelegt ist, daß sie aufeinanderfolgende Übertragungsblöcke empfängt, deren jeder zeitlich verschachtelte PCM-Daten sowie Fehlerkorrektur- ($P_n$, $Q_n$) und Fehlererkennungswörter (CRC) umfaßt, mit einer Detektoreinrichtung (16), die auf die Fehlererkennungswörter (CRC) hin feststellt, ob ein empfangener Übertragungsblock einen Fehler enthält, mit einer Fehleridentifizierungseinrichtung (16), die ein Fehleranzeigesignal (EP) erzeugt, um jedes der in dem empfangenen Übertragungsblock, der als einen Fehler enthaltend ermittelt worden ist, enthaltenen zeitlich verschachtelten Wörter als fehlerhaft zu kennzeichnen, mit einer Entschachtelungseinrichtung (17) zur solchen zeitlichen Verschachtelung des jeweils empfangenen Übertragungsblocks, daß ein entschachtelter Block wiedergewonnen wird, der aus entschachtelten PCM- und Fehlerkorrekturwörtern ($P_n$, $Q_n$) mit gekennzeichneten fehlerhaften entschachtelten Wörtern gebildet ist, mit einer Syndromerzeugungseinrichtung (18), die mit der Entschachtelungseinrichtung (17) verbunden ist und die unter Heranziehung der entschachtelten PCM- und der Fehlerkorrekturwörter ($P_n$, $Q_n$) in dem entschachtelten Block Fehlersyndromsignale erzeugt, und mit einer Fehlerkorrektureinrichtung (20), die auf das Fehlersyndrom hin ein fehlerhaftes PCM-Wort in dem entschachtelten Block als Funktion der übrigen fehlerfreien PCM- und Fehlerkorrekturwörter in dem betreffenden entschachtelten Block korrigiert, dadurch gekennzeichnet, daß eine Abnormalitätsdetektoreinrichtung (18) vorgesehen ist, welche die Beziehung zwischen dem Fehleranzeigesignal (EP) von der Fehleridentifizierungseinrichtung (16) her und dem Fehlersyndrom von der Syndromerzeugungseinrichtung (18) ermittelt und welche selektiv ein Abnormalitätsanzeigesignal in dem Fall, daß eine abnormale Beziehung zwischen dem Fehleranzeigesignal (EP) und dem Fehlersyndrom existiert, und ansonsten ein Normalitätsanzeigesignal erzeugt, und daß eine Sperreinrichtung (22, 23, 24) vorgesehen ist, die ein Markierungskennzeichen (FLG) setzt, welches an die Fehlerkorrektureinrichtung (20) abgegeben wird, derart, daß der Korrekturbetrieb dann gesperrt ist, wenn entweder sämtliche Fehlerkorrekturwörter ($P_n$, $Q_n$) in dem entschachtelten Block durch ihre Fehleranzeigesignale (EP) als fehlerhaft gekennzeichnet sind oder wenn das Abnormalitätsanzeigesignal vorhanden ist oder wenn diese beiden Bedingungen erfüllt sind, und die das Markierungskennzeichen (FLG) zurücksetzt und damit den Korrekturbetrieb ermöglicht, wenn das Normalitätsanzeigesignal vorhanden ist.

2. PCM-Signalverarbeitungsanordnung nach Anspruch 1, wobei die Sperreinrichtung (22, 23, 24) eine Verknüpfungsgliedeinrichtung (22, 23) enthält, die mit der Entschachtelungseinrichtung (17) und der Abnormalitätsdetektoreinrichtung (18) verbunden ist und die das Fehleranzeigesignal ($P_{ep}$, $Q_{ep}$) sämtlicher Fehlerkorrekturwörter ($P_n$, $Q_n$) von dem entschachtelten Block sowie das Normalitäts- oder das Abnormalitätsanzeigesignal von der Abnormalitätsdetektoreinrichtung (18) her aufnimmt.

3. PCM-Signalverarbeitungsanordnung nach Anspruch 2, wobei die Verknüpfungsgliedeinrichtung (22, 23) ein UND-Glied (22) für die Aufnahme des Fehleranzeigesignals ($P_{ep}$, $Q_{ep}$) sämtlicher Fehlerkorrekturwörter ($P_n$, $Q_n$) von dem entschachtelten Block und ein ODER-Glied (23) für die Aufnahme des Ausgangssignals des UND-Gliedes (22) und des Ausgangssignals der Abnormalitätsdetektoreinrichtung (18) enthält.

4. PCM-Signalverarbeitungsanordnung nach Anspruch 3, wobei die Sperreinrichtung (22, 23, 24) zum Setzen des Markierungskennzeichens (FLG) ein Flipflop (24) enthält und die Ausgangssignale von dem ODER-Glied (23) und das Normalitätsanzeigesignal von der Abnormalitätsdetektoreinrichtung (18) aufnimmt.

5. PCM-Signalverarbeitungsanordnung nach Anspruch 4, wobei das Flipflop (24) durch das Ausgangssignal des ODER-Gliedes (23) gesetzt das Markierungskennzeichen (FLG) erzeugt, mit dem die Fehlerkorrektureinrichtung (20) gesperrt wird, und wobei das betreffende Flipflop durch das Normalitätsanzeigesignal von der Abnormalitätsdetektoreinrichtung (18) her zurückgesetzt wird, um das Markierungskennzeichen (FLG) für die Aufhebung der Sperrung zu erzeugen.

6. PCM-Signalverarbeitungsanordnung nach Anspruch 1, wobei die Entschachtelungseinrichtung (17) einen Serien-Parallel-Wandler (15) und eine Zeitverzögerungseinrichtung (17) zur Umsetzung des PCM-Signals in eine Vielzahl von zeitlich verzögerten Signalen umfaßt.

7. PCM-Signalverarbeitungsanordnung nach Anspruch 6, wobei ferner eine 1-Block-Verzögerungsschaltung (19) vorgesehen ist, die zwischen der Zeitverzögerungseinrichtung (17) und der Fehlerkorrektureinrichtung (20) angeschlossen ist.

## Revendications

1. Dispositif de traitement de signaux à modulation par impulsions codées (PCM) agencé pour recevoir des blocs de transmission successifs, chacun comprenant des données PCM imbriquées dans le temps, et des mots de correction d'erreur ($P_n$, $Q_n$) et de détection d'erreur (CRC), le dispositif comprenant:

— un moyen de détection (16) sensible aux mots de détection d'erreur (CRC) pour détecter si un bloc de transmission reçu contient une erreur;
— un moyen d'identification d'erreur (16) pour produire un signal indicateur d'erreur (EP) de manière à identifier comme étant erroné chacun des mots imbriqués dans le temps inclus dans le bloc de transmission reçu qui a été détecté comme contenant une erreur;
— un moyen de désimbrication (17) pour imbriquer dans le temps chacque bloc de transmission reçu en vue de récupérer un bloc désimbrique constitué de mots PCM désimbriqués et de correction d'erreur ($P_n$, $Q_n$), les mots désimbriqués erronés étant respectivement identifiés;
— un moyen générateur de syndrome (18) couplé au moyen de désimbrication (17) pour engendrer des signaux de syndrome d'erreur en utilisant les mots PCM désimbriqués et de correction d'erreur ($P_n$, $Q_n$) dans le bloc désimbriqué;
— un moyen de correction d'erreur (20) sensible au syndrome d'erreur pour corriger un mot PCM erroné dans le bloc désimbriqué en fonction des mots PCM non erronés et de correction d'erreur restants dans ce bloc désimbriqué;

    caractérisé par:

— un moyen de détection d'état anormal (18) pour détecter la relation existant entre le signal indicateur d'erreur (EP) provenant du moyen d'identification d'erreur (16) et le syndrome d'erreur provenant du moyen générateur de syndrome (18), et pour produire sélectivement un signal indiquant un état anormal quand une relation anormale existe entre le signal indicateur d'erreur (EP) et le syndrome d'erreur, et un signal indiquant un état normal les autres fois; et

— un moyen d'invalidation (22, 23, 24) pour établir un indicateur (FLG) qui est fourni au moyen de correction d'erreur (20) de manière à invalider l'opération de correction quand tous les mots de correction d'erreur ($P_n$, $Q_n$) dans le bloc désimbriqué sont identifiés comme erronés par leurs signaux indicateurs d'erreur (EP) ou quand le signal indiquant un état anormal est présent ou quand ces deux conditions sont satisfaites, et pour remettre à zéro le signal indicateur (FLG) en validant ainsi l'opération de correction quand le signal indiquant un état normal est présent.

2. Dispositif de traitement de signaux PCM selon la revendication 1, dans lequel le moyen d'invalidation (22, 23, 24) comprend un moyen à portes (22, 23) connecté au moyen de désimbrication (17) et au moyen de détection d'état anormal (18) et pour recevoir le signal indicateur d'erreur (Pep, Qep) de tous les mots de correction d'erreur ($P_n$, $Q_n$) du bloc désimbriqué et le signal indiquant un état normal ou un état anormal provenant du moyen de détection d'état anormal (18).

3. Dispositif de traitement de signaux PCM selon la revendication 2, dans lequel le moyen à portes (22, 23) comprend une porte ET (22) pour recevoir le signal indicateur d'erreur (Pep, Qep) de tous les mots de détection d'erreur ($P_n$, $Q_n$) du bloc désimbriqué et une porte OU (23) pour recevoir le signal de sortie de la porte ET (22) et le signal de sortie du moyen de détection d'état anormal (18).

4. Dispositif de traitement de signaux PCM selon la revendication 3, dans lequel le moyen d'invalidation (22, 23, 24) pour établir le signal indicateur (FLG) comprend une bascule (24) et reçoit les signaux de sortie de la porte OU (23) et le signal indiquant un état normal du moyen de détection d'état anormal (18).

5. Dispositif de traitement de signaux PCM selon la revendication 4, dans lequel la bascule (24) est mise à un par le signal de sortie de la porte OU (23) de manière à produire le signal indicateur (FLG) pour invalider le moyen de correction d'erreur (20) et remise à zéro par le signal indiquant un état normal provenant du moyen de détection d'état anormal (18) de manière à produire le signal indicateur (FLG) pour supprimer cette invalidation.

6. Dispositif de traitement de signaux PCM selon la revendication 1, dans lequel le moyen de désimbrication (17) comprend un convertisseur série-parallèle (15) et un moyen à retard de temps (17) pour convertir le signal PCM en un ensemble de signaux retardés dans le temps.

7. Dispositif de traitement de signaux PCM selon la revendication 6, incluant en outre un circuit à retard d'un bloc (19) connecté entre le moyen à retard de temps (17) et le moyen de correction d'erreur (20).

## FIG. 1A

| An | Bn-3D | An+1-6D | Bn+1-9D | An+2-12D | Bn+2-15D | Pn-18D | Qn-21D | CRC Code |
|---|---|---|---|---|---|---|---|---|

←————————— 14×8=112 Bits —————————→

16 Bits

## FIG. 1B

Content Identifying Signal

| Cue Signal | | Address Signal | Control Signal | CRC Code |
|---|---|---|---|---|

←—— 56 Bits ——→ 14 Bits ←— 28 Bits —→ 14 Bits  16 Bits

128 Bits

## FIG. 1C

Data Synchronizing Signal

White Reference Signal

HD

13  13  4 ←————— 128 Bits (1 Block) —————→ 10  HD

←————————— 168 Bits (1H) —————————→

## FIG. 1D

VD

Odd Numbered Field

3 3 3 1 ←——— 245H (Data Interval) ———→ 7.5

←————— 262.5H (1V) —————→

VD

Even Numbered Field

3 3 3.5 1 ←——— 245H (Data Interval) ———→ 7

←————— 262.5H (1V) —————→

1

## FIG. 3A

7D

35 Blocks

D'(=16 Blocks)

X

Qn=(Qn) ——— (Pn+3D)

Pn ——— (Bn+2+6D)

Bn+2 ——— (An+2+9D)

An+2 ——— (Bn+1+12D)

Bn+1   REC. DATA ——— (An+1+15D)

An+1 ——— (Bn+18D)

Bn ——— (An+21D)

An

Read Out                    Write In

t0 t1  t3 t5 t7 t9 t11 t13 t14 t15

t2 t4 t6 t8 t10 t12

## FIG. 3B

(FLG)

(6D+35H)